# EUROPEAN PATENT APPLICATION

(11) **EP 0 535 610 A2**
(43) Date of publication of application: **07.04.1993**
(21) Application number: 92116679.9
(22) Date of filing: 29.09.1992
(51) Int. Cl.: G06F 15/70

(54) **Printed matter inspection method**

(30) Priority: 30.09.1991 JP 278696/91
(71) Applicant: EZEL INC., Setagaya-ku Tokio 155 (JP)
(72) Inventor: Takahashi, Tooru, c/o Ezel Inc., Tokyo 112 (JP); Kikuchi, Aki, c/o Ezel Inc., Tokyo 112 (JP)
(74) Representative: Grünecker, Kinkeldey, Stockmair & Schwanhäusser Anwaltssozietät

(57) **Abstract**

It is possible to inspect a printed matter precisely because lines are surely and accurately extracted by the present invention: extraction of lines are the important point for the judgment if a character is correctly printed or not.

The printed matter inspection method according to the present invention comprises the following steps: i) an image of a predetermined area including a line is input; ii) a density projection is performed on said input image; iii) a start point and end point of change of density are emphasized in said density projection; iv) the center pixel in each predetermined convolution is substituted by the minimal density pixel in each said convolution; v) a density projection is performed; and vi) said printed matter defective or not is judged according to said density projection in v).

## Description

### FIELD OF THE INVENTION

The present invention relates to a method for inspecting a printed matter, for example, a printed serial number on a warranty.

### BACKGROUND OF THE INVENTION

When a character in a predetermined area surrounded by a line is judged if it is correctly printed or not, a conventional method extracts the location of the line from density projection diagram of the predetermined area, then the location of the printed character is judged according to the location of the line. When thin and short lines and characters are mixed on paper, however, it is difficult to extract the information of line only. It means that there has been a bar to judge the state of the print of a character in the area.

### SUMMARY OF THE INVENTION

The present invention is invented so as to solve the above problems and has an object to provide a precise method for inspecting a printed matter by extracting a line accurately for judging a character if it is correctly printed in the predetermined area.

A printed matter inspection method relates to the present invention performs density projection on the predetermined area including a line, sharpening on the density projection and contraction on the sharpened density projection in order to extract accurately the location of the line for the judgment of the location of a character.

It is possible to extract accurately the location of a line for the judgment of the print of a character, therefore, it can be precise to judge the location of a printed character surrounded line.

### BRIEF DESCRIPTION OF THE DRAWINGS

Figure 1 shows a flowchart of an embodiment of the present invention.

Figure 2 shows an image of an original print.

Figure 3 shows an image of ideal density projection.

Figure 4 shows an image of real density projection.

Figure 5 shows a dull density projection including the start point and end point of the change of density.

Figure 6 shows a graph of the secondary differential.

Figure 7 shows an image performed sharpening on Figure 5.

Figure 8 shows an image performed contraction on Figure 7.

Figure 9 shows an image performed sharpening and contraction on Figure 4.

Figure 10 shows an image of a normal density projection.

Figure 11 shows an unusual density projection.

Figure 12 shows an image of a density projection of only line without characters.

### DESCRIPTION OF ALPHABETICAL MARKS

(a) indicates the start point of the change of density.

(b) indicates the end point of the change of density.

### PREFERRED EMBODIMENT OF THE PRESENT INVENTION

Hereinafter, an embodiment of the printed matter inspection method according to the present invention is described with reference to the attached drawings.

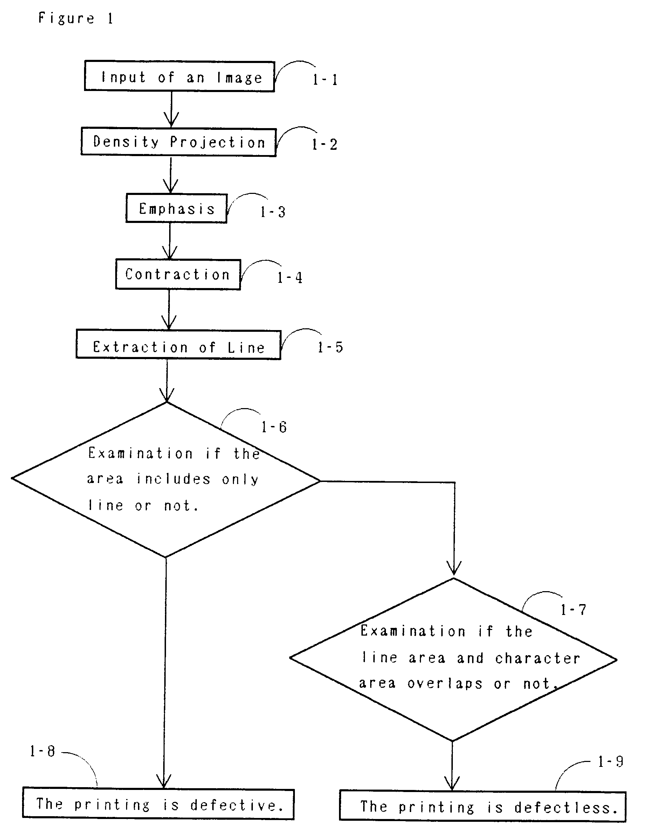

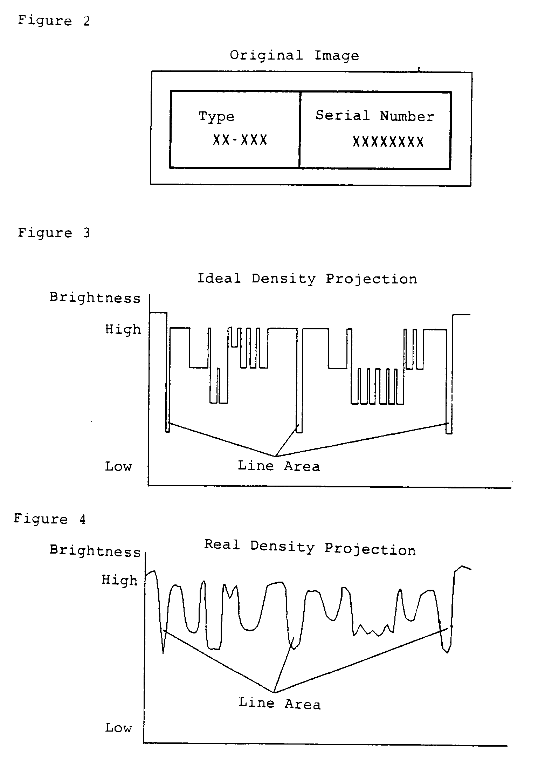

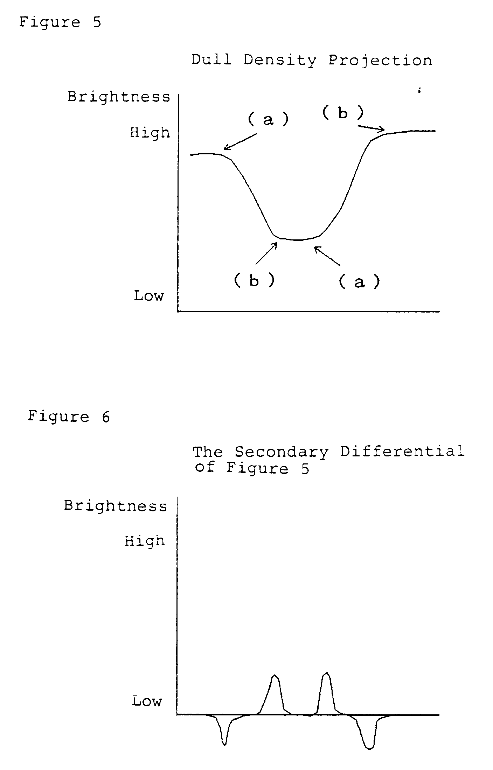

Figure 1 shows a flowchart of the embodiment. An image to be processed (in Figure 2) is input by a CCD camera on step 1-1. This input image is performed density projection on step 1-2. Here, the image to be performed density projection has multilevel density because the information of the image is extracted as much as possible in detail. When density projection is performed, Figure 3 is an ideal pattern of it. When the resolution of a CCD camera is low power or the vertical line is short as in Figure 2, it is difficult to extract the line because of the leak of the information of the line. The density projection diagram is that in Figure 4 in such a case. Figure 5 shows a part of enlarged density projection diagram of Figure 4 which could not extract all the information of a line and become a dull line.

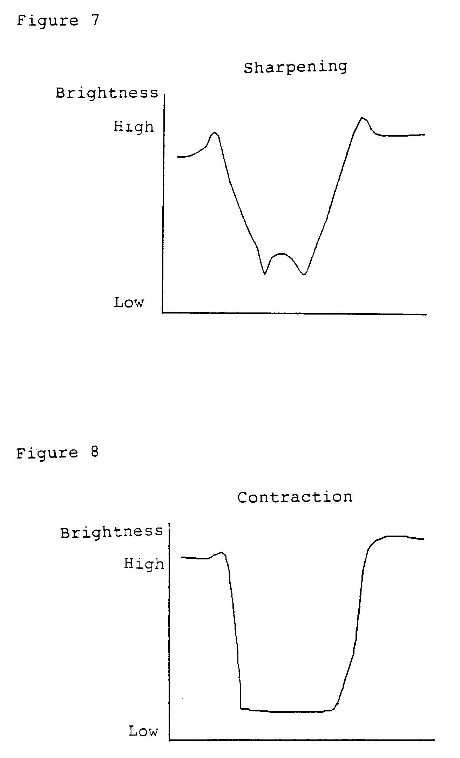

It is calculated the secondary differential of the brightness of each coordinates as in Figure 6. Then, the secondary differential is subtracted from the each brightness in Figure 5. The result after the subtraction is in Figure 7. As shown, the shoulders of an edge is emphasized (It is corresponding to step 3 in the flowchart in Figure 1.) The "shoulders of an edge" means the start point and end point of the change of density. In Figure 5, (a) and (b) are the "shoulders of an edge". A coefficient can be multiplied to the value after secondary differential of a density projection so as to emphasize the shoulders of an edge furthermore. The coefficient is decided according to the dullness of the edge. As the dullness of an edge is high, the coefficient is large value and as it is low, the coefficient is small value. The coefficient is defined in order for shoulders of an edge to be emphasized enough as in Figure 7. Next, contraction is performed on an image obtained in this way on step 1-4 in the flowchart. The contraction takes the minimal brightness in 3× 3 convolution as the center pixel. It can be calculated by the formula below.

$\text{E'=MIN(A,B,C,D,E,F,G,H,I)}$

In this formula, from "A" to "I" are the brightness of each pixel. "E" of the center pixel becomes "E'" through the calculation.

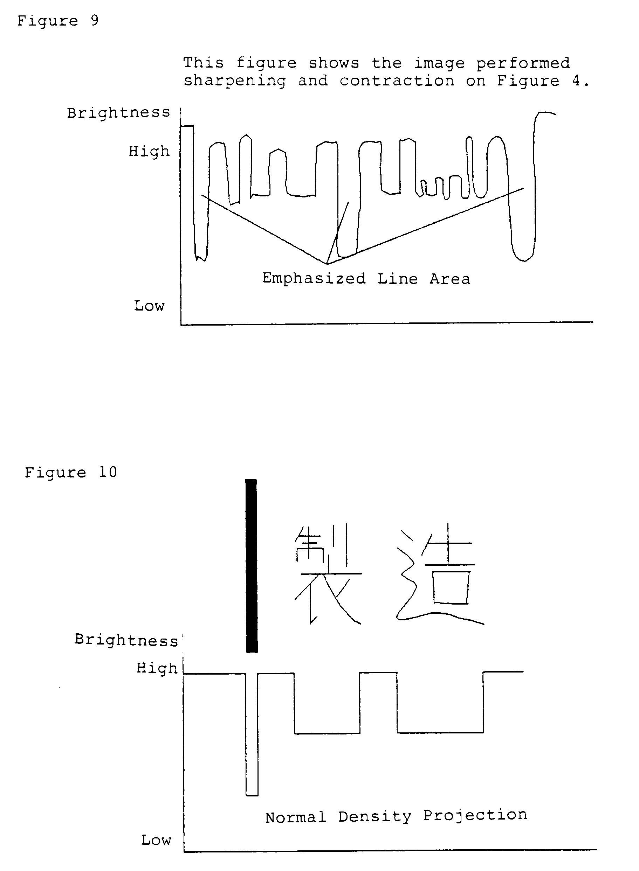

Figure 8 is the result performed contraction on Figure 7. Figure 9 is the result performed sharpening and contraction on Figure 4. Obviously, in Figure 9, the line is emphasized because the part with high brightness is faint and the part with low brightness, that is, the dark part because of the line is emphasized furthermore by contraction. In this way, the line can be extracted surely (on step 1-5 in the flowchart in Figure 1) and the location of the line is found accurately.

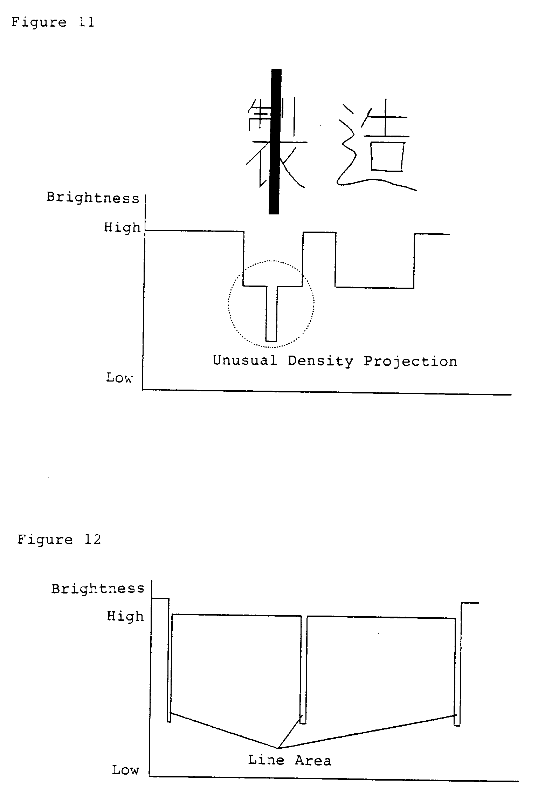

It is judged that a character is correctly printed or not on material to be inspected from the density projection in which a line is found through the above processing. When density projection shows only lines (step 1-6 in the flowchart in Figure 1), it is judged to be an defective one (on step 1-8 in the flowchart in Figure 1) because it means characters to be printed are not printed. Figure 12 shows such a case of the density projection of only line.

When it is judged that a character is included besides the line, the processing is advanced to step 1-7 in the flowchart. On step 1-7, it is judged whether the line and character overlap or not. When they does not overlap as in Figure 10, a normal density projection is formed. On the other hand, when line and character overlap each other, an unusual density projection is formed. In such a case, it is judged to be a defective one on step 1-9 in the flowchart.

It is judged if it is defective or not by comparing the template with no defect, which is obtained beforehand. It is possible to execute the judgment according to the statistic characteristics value such as the mean value of brightness in the area with a predetermined width from the location of line.

As mentioned above, it is possible to inspect a printed matter precisely because lines are surely and accurately extracted by the present invention: extraction of lines are the important point for the judgment if a character is correctly printed or not. It is of course possible to apply the present invention to any other uses to process by emphasizing the information of position of partition.

## Claims

1. A printed matter inspection method comprising steps of:
i) inputting an image of a predetermined area including a line;
ii) performing a density projection on said input image;
iii) emphasizing a start point and end point of change of density in said density projection;
iv) substituting the center pixel in each predetermined convolution by the minimal density pixel in each said convolution;
v) performing a density projection; and
vi) judging said printed matter defective or not according to said density projection in v).

2. A printed matter inspection method wherein it is judged if a line exists or not.

3. A printed matter inspection method wherein a pattern of density projection is judged when a line exists.
